# EUROPEAN PATENT APPLICATION

(11) **EP 3 018 151 A1**
(43) Date of publication of application: **11.05.2016**
(21) Application number: 14192048.8
(22) Date of filing: 06.11.2014
(51) Int. Cl.: C08F 8/04, C08F 8/32, C08F 2/38

(54) **PROCESS FOR PREPARING INERT RAFT POLYMERS**

(71) Applicant: Universiteit Gent, 9000 Gent (BE)
(72) Inventor: The designation of the inventor has not yet been filed
(74) Representative: Office Kirkpatrick

(57) **Abstract**

This invention provides a process for preparing an inert RAFT polymer, comprising polymerizing a RAFT-polymerizable ethylenically unsaturated monomer in the presence of a thiocarbonylthio compound until the monomer conversion reaches a value between 40% and 90%, and further comprising, when such value has been reached, adding a 5-fold to 100-fold molar excess, with respect to the thiocarbonylthio compound, of a reducing agent capable of performing aminolysis of the thiocarbonylthio end groups of the polymer. This invention further relates to an inert RAFT polymer prepared by such process.

## Description

### FIELD OF THE INVENTION

The present invention relates to a process for preparing inert RAFT polymers. More specifically the present invention relates to a process for polymerizing ethylenically unsaturated monomers in the presence of a RAFT agent and removing the resulting terminal groups of the polymer whilst reducing the overall preparation time of the final inert polymer and/or reducing the amount of solvent necessary to perform the reaction.

### BACKGROUND OF THE INVENTION

Controlled radical polymerization is provided by methods such as reversible addition-fragmentation chain transfer polymerization (hereinafter referred as RAFT polymerization) such as disclosed in WO 98/01478 and WO 99/031144. RAFT polymerization shows the advantage of being insensitive to acid groups, thus making monomer purification less critical, especially when a (meth)acrylic acid ester is concerned. However RAFT polymerization requires thiocarbonyl compounds with a displeasant smell. The resulting polymer carries a thiocarbonylthio group at one chain end or both. This end group is colored and rather unstable, in particular under basic conditions, and thus imparts an undesirable colour to the resulting polymer which tends to limit the field of applications of RAFT polymers. The instability of the thiocarbonylthio group can lead to unwanted release of low molecular weight thiol-containing compounds accompanied by undesirable odour. Therefore, methods for the removal or transformation of the thiocarbonylthio end groups into colorless groups either non-reactive or amenable to controlled modification have been developed.

Such methods include radical induced reduction, radical exchange and thermal elimination, and have been reviewed for instance by Willcock and O'Reilly in Polym. Chem. (2010) 1:149-157. For instance, WO 2002/090397 discloses a method involving bringing into contact (A) at least one organic polymer having a reactive dithiocarbonylate or dithiophosphorylate end group, (B) at least one source of free radicals, and (C) at least one organic compound carrying an unstable hydrogen atom. WO 2005/113612 discloses a process for replacing the thiocarbonylthio end group of a polymer with hydrogen, by contacting said polymer with a salt of hypophosphorous acid. A common reducing agent, n-butyl stannane, is toxic and is not easily removable from the polymer. Thermolysis of RAFT polymers leads to polymers carrying unsaturated end groups which are not desirable for all applications, and furthermore requires a temperature of at least 200°C.

Lima et al in J. Polym. Sci. Part A: Polym. Chem. (2005) 43, 959 discloses a two-steps procedure for transforming the RAFT end groups, wherein first aminolysis is used to convert thiocarbonylthio groups of purified polymers into thiols, and after another purification in the second step the thiol groups are further modified via Michael addition to obtain polymers with hydroxyl end groups. Qiu and Winnik in Macromol. Rapid Commun. (2006) 27:1648-1653 discloses a process involving, first, aminolysis of the thiocarbonylthio groups of purified polymers and, second, the transformation of the resulting thiols into stable thioethers by conjugate addition with *α*,*β*-unsaturated derivatives without isolation of intermediate polymers. This methodology was exemplified with a RAFT poly(*N*-isopropylacrylamide) and two *α*,*β-*unsaturated esters, 2-hydroxyethylacrylate and butyl acrylate. After complete dissolution of the precursor polymer in tetrahydrofuran, a 5-fold molar excess of butylamine and a small amount of a reducing agent, tris(2-carboxyethyl) phosphine hydrochloride, were added to the solution and, after one hour at room temperature, the originally yellow solution became colorless, indicating complete aminolysis. Then a 10-fold molar excess of the *α*,*β*-unsaturated ester was added at room temperature and the reaction mixture stirred for 10 hours. This method suffers the disadvantage that aminolysis has to be completed before the addition of the *α*,*β*-unsaturated ester, and a large excess of the *α*,*β*-unsaturated ester with respect to the amine is added to overcome an undesirable Michael addition of the amine to the *α*,*β*-unsaturated ester.

Therefore there is still a need in the art for a process for a one-pot RAFT polymerization with *in situ* removal or transformation of the thiocarbonylthio end group of a RAFT polymer into colorless groups, which process can proceed in a one-pot procedure in such a way that the preparation time of the final colorless polymer can be significantly reduced, and/or the amount of solvent used can also be significantly reduced, each feature contributing to a more effective and less expensive manufacturing process.

### SUMMARY OF THE INVENTION

The present invention is based on the unexpected finding that the *in situ* removal or transformation of the thiocarbonylthio end groups of a RAFT polymer can be achieved directly after the RAFT polymerization in a one-pot procedure whilst at the same time significantly reducing the overall preparation time of the final inert polymer and/or significantly reducing the amount of solvent required for performing the reaction. The present invention therefore advantageously relates to a process for preparing an inert RAFT polymer as defined in claim 1, as well as the inert RAFT polymer derived from such process.

### DEFINITIONS

For the purpose of understanding the invention, the following terms shall be defined as set forth below throughout the description.

As used herein with respect to a substituting group, and unless otherwise stated, the term "alkyl" refers to straight and branched chain saturated acyclic hydrocarbon monovalent groups having from 1 to 8 carbon atoms such as, for example, methyl, ethyl, propyl, n-butyl, 1-methylethyl (isopropyl), 2-methylpropyl (isobutyl), 1,1-dimethylethyl (ter-butyl), n-pentyl, n-hexyl, n-heptyl and n-octyl; all of the said alkyl groups being optionally substituted with one or more substituents independently selected from the group consisting of halogen, nitro, cyano, ester and phthalimido such as, but not limited to, trifluoromethyl, perfluoroalkyl, chloromethyl, dichloromethyl, nitromethyl, cyanomethyl, etc.

As used herein with respect to a substituting group, and unless otherwise stated, the term "cycloalkyl" refers to a monocyclic saturated hydrocarbon monovalent group having a ring of 3 to 10 carbon atoms, such as for instance cyclopropyl, cyclobutyl, cyclopentyl, cyclohexyl, cycloheptyl, cyclooctyl and the like, said ring being optionally substituted with one or more C₁₋₄ alkyl groups (such as, but not limited to, menthyl, i.e. 4-methyl-1-isopropylcyclohexyl), or a C₇₋₁₀ polycyclic saturated hydrocarbon monovalent group having from 7 to 10 carbon atoms in two or more rings such as, but not limited to, norbornyl, fenchyl, trimethyltricycloheptyl or adamantyl.

As used herein with respect to a substituting group, and unless otherwise stated, the term "aryl" refers to any mono- or polycyclic aromatic monovalent hydrocarbon group having from 6 to 30 carbon atoms such as, but not limited to, phenyl, naphthyl, anthracenyl, phenantracyl, fluoranthenyl, chrysenyl, pyrenyl, biphenylyl, terphenyl, picenyl, indenyl, biphenyl, indacenyl, benzocyclobutenyl, benzocyclooctenyl and the like, also including fused benzo-C₄₋₈ cycloalkyl groups (the latter being as defined above, but with 4 to 8 carbon atoms in the ring) such as, but not limited to, indanyl, tetrahydronaphtyl, fluorenyl and the like, all of the said aryl groups being optionally substituted with one or more substituents independently selected from the group consisting of halogen, amino, trifluoromethyl, hydroxyl, sulfhydryl, cyano and nitro, such as, but not limited to, 4-fluorophenyl, 4-chlorophenyl, 3,4-dichlorophenyl, 4-cyanophenyl, 2,6-dichlorophenyl, 2-fluorophenyl, 3-chlorophenyl, 3,5-dichlorophenyl and the like.

As used herein with respect to a substituting group, and unless otherwise stated, the terms " alkoxy", "cycloalkoxy", "aryloxy", "thioaryl" and "thioalkyl" refer to substituents wherein a carbon atom of an alkyl group, a cycloalkyl group or an aryl group (each of them such as defined herein above), is attached to an oxygen atom or a divalent sulfur atom through a single bond such as, but not limited to, methoxy, ethoxy, propoxy, n-butoxy, isopropoxy, sec-butoxy, tert-butoxy, cyclopropyloxy, cyclobutyloxy, cyclopentyloxy, cyclohexyloxy, menthoxy, thiomethyl, thioethyl, thiopropyl, thiobutyl, phenoxy and the like.

As used herein, and unless stated otherwise, the terms "alkenyl" and "cycloalkenyl" refer to linear or branched hydrocarbon chains having from 2 to 10 carbon atoms, respectively cyclic hydrocarbon chains having from 3 to 10 carbon atoms, with at least one ethylenic unsaturation (i.e. a carbon-carbon sp2 double bond) which may be in the cis or trans configuration such as, but not limited to, vinyl (-CH=CH₂), allyl (-CH₂CH=CH₂), cyclopentenyl, cyclohexenyl and 5-hexenyl (-CH₂ CH₂CH₂CH₂CH=CH₂).

As used herein, and unless stated otherwise, the terms "alkynyl" and "cycloalkynyl" refer to linear or branched hydrocarbon chains having from 2 to 10 carbon atoms, respectively cyclic hydrocarbon chains having from 3 to 10 carbon atoms, with at least one acetylenic unsaturation (i.e. a carbon-carbon sp triple bond) such as, but are not limited to, ethynyl (-C≡CH), propargyl (-CH₂C≡CH), cyclopropynyl, cyclobutynyl, cyclopentynyl, or cyclohexynyl.

As used herein with respect to a substituting group, and unless otherwise stated, the term "arylalkyl" refers to an aliphatic saturated hydrocarbon monovalent group (preferably a C₁₋₄ alkyl such as defined above) onto which an aryl group (such as defined herein) is linked, and wherein the said aliphatic group and/or the said aryl group may be optionally substituted with one or more substituents independently selected from the group consisting of halogen, amino, hydroxyl, sulfhydryl, alkyl, trifluoromethyl, cyano and nitro, such as, but not limited to, benzyl, 4-chlorobenzyl, 4-fluorobenzyl, 2-fluorobenzyl, cyanobenzyl, nitrobenzyl, 2-fluorobenzyl, 3,4-dichlorobenzyl, 2,6-dichlorobenzyl, 3-methylbenzyl, 4-methylbenzyl, 4-*ter*-butylbenzyl, phenylpropyl, 1-naphthylmethyl, phenylethyl, 1-amino-2-phenylethyl, 1-amino-2-[4-hydroxy-phenyl]ethyl, and styryl.

When a substituent is present in an alkyl, aryl or arylalkyl group of a chain transfer agent, for instance in R and/or Z of the formula (A) depicted below, this substituent may be appropriately selected by the skilled person by using guidance from reviews such as, but not limited to, Polymers (2014) 6, pages 1443-1447 and Australian Journal of Chemistry (2012) 65, pages 985-1076.

As used herein with respect to a substituting group, and unless otherwise stated, the term "heterocyclyl" refers to a mono- or polycyclic, saturated or mono-unsaturated or polyunsaturated monovalent hydrocarbon group having from 3 up to 15 carbon atoms and including one or more heteroatoms in one or more heterocyclic rings, each of said rings having from 3 to 10 atoms (and optionally further including one or more heteroatoms attached to one or more carbon atoms of said ring, for instance in the form of a carbonyl or thiocarbonyl or selenocarbonyl group, and/or to one or more heteroatoms of said ring, for instance in the form of a sulfone, sulfoxide, N-oxide, phosphate, phosphonate or selenium oxide group), each of said heteroatoms being independently selected from the group consisting of nitrogen, oxygen, sulfur, selenium and phosphorus, also including radicals wherein a heterocyclic ring is fused to one or more aromatic hydrocarbon rings for instance in the form of benzo-fused, dibenzo-fused and naphto-fused heterocyclic radicals; within this definition are included heterocyclic groups such as, but not limited to, pyridyl, dihydropyridyl, tetrahydropyridyl (piperidyl), thiazolyl, tetrahydrothienyl, tetrahydrothienyl sulfoxide, furanyl, thienyl, pyrrolyl, pyrazolyl, imidazolyl, tetrazolyl, benzofuranyl, thianaphthalenyl, indolyl, indolenyl, quinolinyl, isoquinolinyl, benzimidazolyl, piperidinyl, 4-piperidonyl, pyrrolidinyl, 2-pyrrolidonyl, pyrrolinyl, tetrahydrofuranyl, bis-tetrahydrofuranyl, tetrahydropyranyl, bis-tetrahydropyranyl, tetrahydroquino-linyl, tetrahydroisoquinolinyl, decahydroquinolinyl, octahydroisoquinolinyl, azocinyl, triazinyl, 6H-1,2,5-thiadiazinyl, 2H,6H-1,5,2-dithiazinyl, thianthrenyl, pyranyl, isobenzofuranyl, chromenyl, xanthenyl, phenoxathinyl, 2H-pyrrolyl, isothiazolyl, isoxazolyl, pyrazinyl, pyridazinyl, indolizinyl, isoindolyl, 3H-indolyl, 1H-indazoly, purinyl, 4H-quinolizinyl, phthalazinyl, naphthyridinyl, quinoxalinyl, quinazolinyl, cinnolinyl, pteridinyl, 4H-carbazolyl, carbazolyl, ß-carbolinyl, phenanthridinyl, acridinyl, pyrimidinyl, phenanthrolinyl, phenazinyl, phenothiazinyl, furazanyl, phenoxazinyl, isochromanyl, chromanyl, imidazolidinyl, imidazolinyl, pyrazolidinyl, pyrazolinyl, piperazinyl, indolinyl, isoindolinyl, quinuclidinyl, morpholinyl, oxazolidinyl, benzotriazolyl, benz-isoxazolyl, oxindolyl, benzoxazolinyl, benzothienyl, benzothiazolyl and isatinoyl; heterocyclic groups may be sub-divided into heteroaromatic (hetero-aryl) groups such as, but not limited to, pyridyl, dihydropyridyl, pyridazinyl, pyrimidinyl, pyrazinyl, s-triazinyl, oxazolyl, imidazolyl, thiazolyl, isoxazolyl, pyrazolyl, isothiazolyl, furanyl, thiofuranyl, thienyl, and pyrrolyl, and non-aromatic heterocyclic groups; when a heteroatom of the said non-aromatic heterocyclic group is nitrogen, the latter may be substituted with a substituent selected from the group consisting of alkyl, cycloalkyl, aryl, arylalkyl and alkylaryl (such as defined herein).

The term "acyl" as used herein, unless otherwise stated, refers to a carbonyl group directly attached to an alkyl, alkenyl, alkynyl, aryl, heterocyclic or arylalkyl group (such as defined hereinbefore), such as for example alkanoyl (alkylcarbonyl), aroyl (arylcarbonyl), arylalkanoyl or alkylaroyl groups, wherein the carbonyl group is coupled to another molecule.

As used herein with respect to a substituting atom, and unless otherwise stated, the term "halogen" refers to any atom selected from the group consisting of fluoro, chloro, bromo and iodo, preferably fluoro or chloro.

As used herein, the term "polydispersity index" (hereinafter referred as PDI) refers to the ratio of the weight average molecular weight to the number average molecular weight of a polymer.

As used herein, the terms "nearly monodisperse" refer to a polymer with a (PDI) ranging from about 1.05 to about 1.30, more preferably a PDI from about 1.05 to about 1.20, and most preferably a PDI from about 1.05 to about 1.15.

### BRIEF DESCRIPTION OF THE DRAWINGS

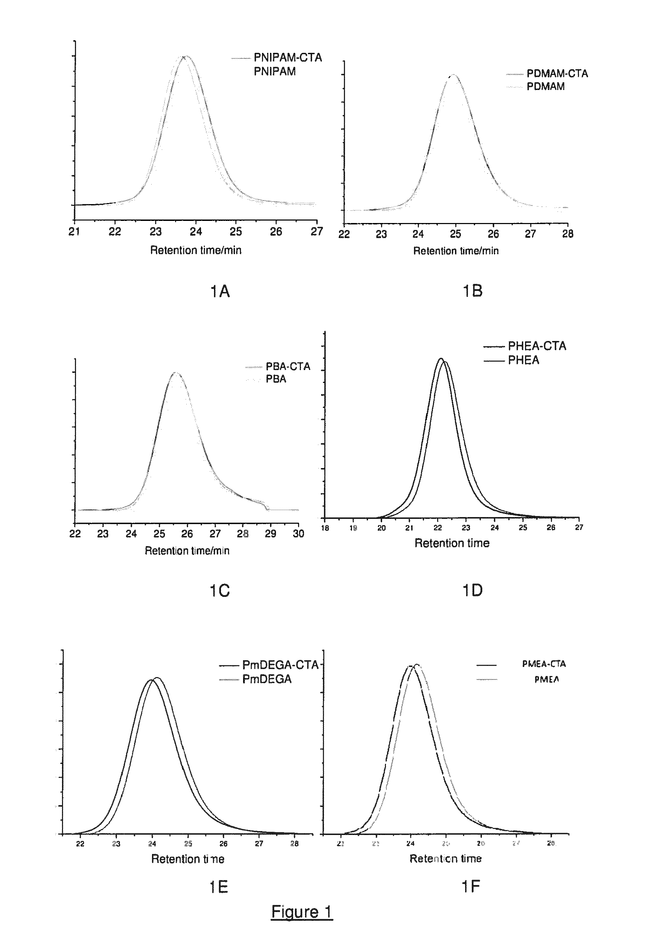

Figure 1 shows the size-exclusion chromatography (SEC) retention times of the following RAFT polymers before (P-CTA) and after (P) *in situ* end group transformation according to the present invention: poly-N-isopropylacrylamide (PNIPAM, figure 1A), poly-N,N-dimethylacrylamide (PDMAM, figure 1B), poly(butyl acrylate) (PBA, figure 1C), poly(2-hydroxyethyl acrylate) (PHEA, figure 1D), poly(di(ethylene glycol) methyl ether acrylate) (PmDGEA, figure 1E) and poly(2-methoxyethyl acrylate) (PMEA, figure 1 F).

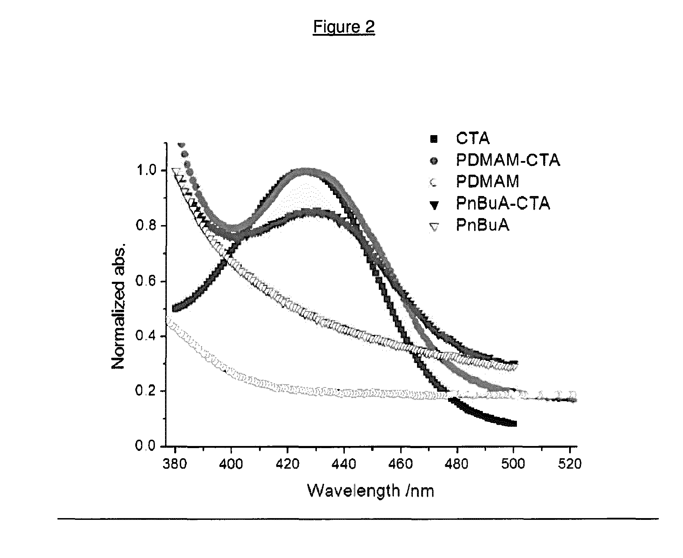

Figure 2 shows the UV-vis spectra, between 380 and 500 nm, of poly-N,N-dimethylacrylamide (PDMAM-CTA and PDMAM) and poly(n-butyl acrylate) (PBA-CTA and PBA), before (solid) and after (hollow) *in situ* end group transformation according to the present invention. The spectrum of the pure chain transfer agent (CTA) is also shown as a reference.

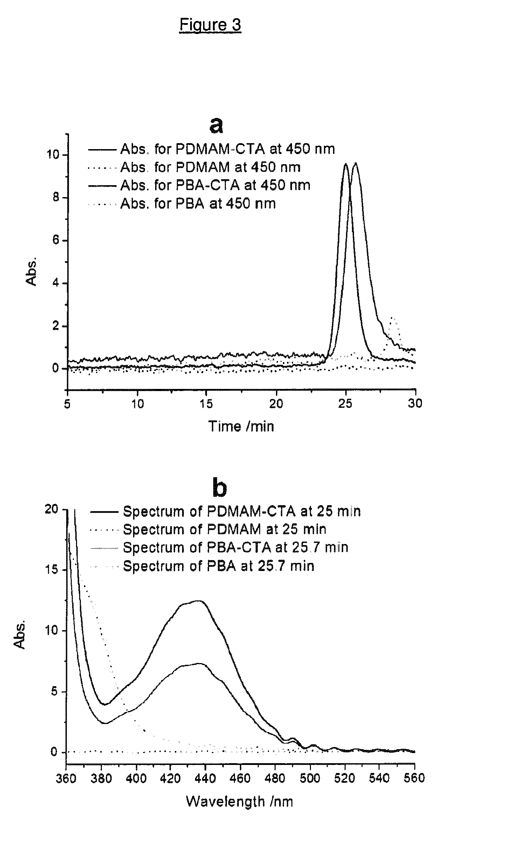

Figure 3 shows the size-exclusion chromatography (SEC) retention times at 450 nm (figure 3a) and the absorption spectra collected with a diode array detector (figure 3b) for poly-N,N-dimethylacrylamide (PDMAM-CTA and PDMAM) and poly(n-butyl acrylate) (PBA-CTA and PBA), before and after *in situ* end group transformation according to the present invention.

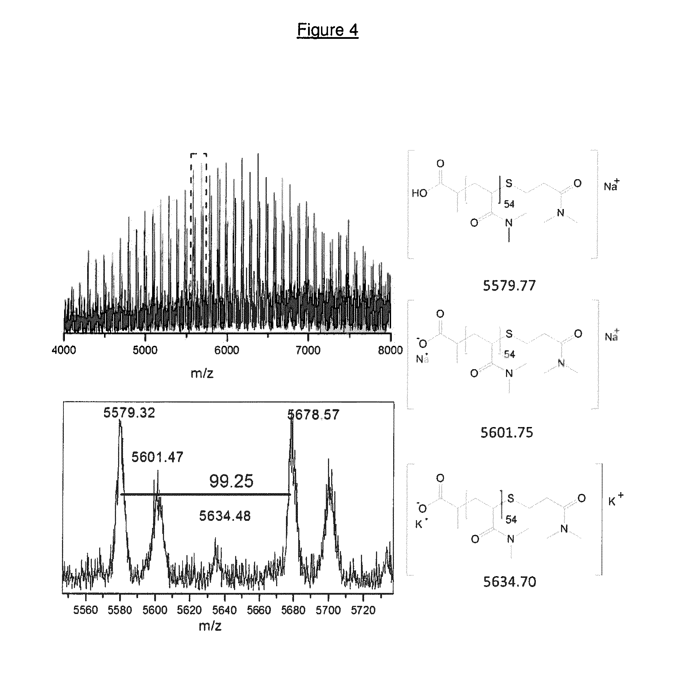

Figure 4 shows the matrix-assisted laser desorption ionization time-of-flight mass spectrum of poly-N,N-dimethylacrylamide (PDMAM) synthesized by one pot RAFT polymerization and *in situ* end group transformation according to the present invention. (top: full view; bottom: partial enlargement). Assigned structures and ions of the peaks in the enlarged view are shown on the right.

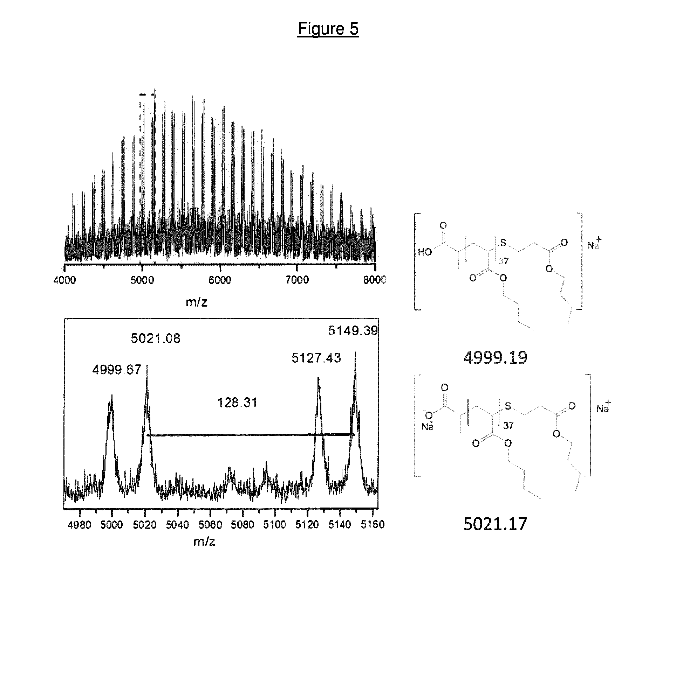

Figure 5 shows the matrix-assisted laser desorption ionization time-of-flight mass spectrum of poly(butyl acrylate) PBA synthesized by one pot RAFT polymerization and *in situ* end group transformation according to the present invention. (top: full view; bottom: partial enlargement). Assigned structures and ions of the peaks in the enlarged view are shown on the right.

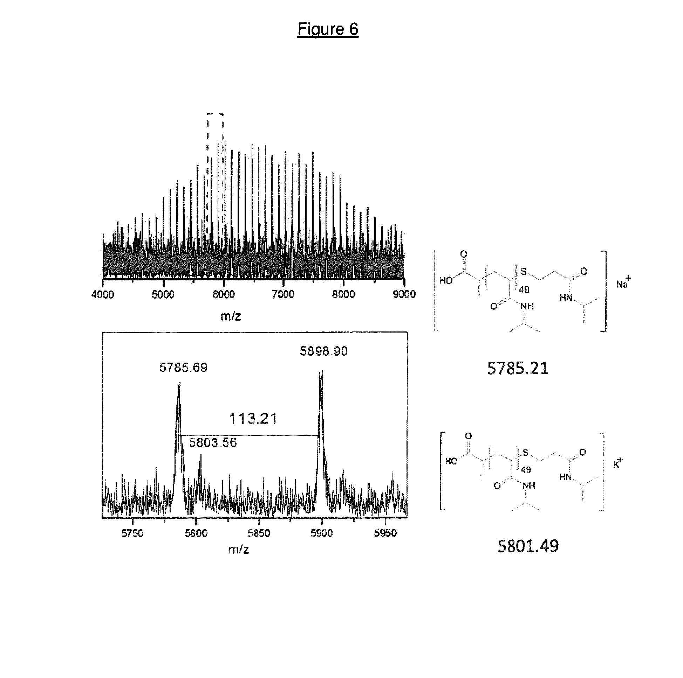

Figure 6 shows the matrix-assisted laser desorption ionization time-of-flight mass spectrum of poly-N-isopropylacrylamide (PNIPAM) synthesized by one pot RAFT polymerization and *in situ* end group transformation according to the present invention (top: full view; bottom: partial enlargement). Assigned structures and ions of the peaks in the enlarged view are shown on the right.

### DETAILED DESCRIPTION OF THE INVENTION

In a general embodiment, the present invention provides a process for preparing an inert RAFT polymer, comprising polymerizing a RAFT-polymerizable ethylenically unsaturated monomer in the presence of a thiocarbonylthio compound until the monomer conversion reaches a value between 40% and 90%, and further comprising, when such value has been reached, adding a 5-fold to 100-fold molar excess, with respect to the thiocarbonylthio compound, of a reducing agent capable of performing aminolysis of the thiocarbonylthio end groups of the polymer.

Each term of this broad definition of the concept of the present invention will now be described in more details. The process of the present invention refers to an improved RAFT polymerization method. It is widely applicable to free radically polymerizable monomers that are RAFT-polymerizable, i.e. wherein controlled free radical polymerization occurs in the presence of (i) a source of initiating free radicals and (ii) a thiocarbonylthio compound acting as a chain transfer agent, being represented by one of the formula (A) 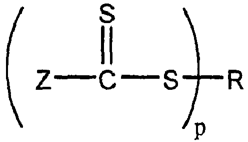 wherein:
- Z is selected from the group consisting of hydrogen, chloro, alkyl, aryl, heterocyclyl, alkylthio, alkoxycarbonyl, aryloxycarbonyl, acyloxy, carbamoyl, cyano, diaryl- or dialkyl-phosphonato, diaryl- or dialkyl-phosphinato, arylalkyl, alkoxy and dialkylamino,
- R is a p-valent linking moiety selected from the group consisting of alkyl, cycloalkyl, aryl, alkylaryl and heterocyclyl, and
- p is 1 or an integer greater than 1, for instance p is 2.

Suitable individual examples of such chain transfer agents are disclosed for instance in EP 0910587-B1, especially at pages 16-17 thereof, and include, but are not limited to dithioesters (p = 1) and reagents with multiple thiocarbonylthio groups (p is 2 or more). Further suitable sulfur-based chain transfer agents may also be as disclosed in U.S. Patent No. 6,642,318, in particular one of the following:
- vinylogous dithioesters such as, but not limited to, benzyl 3,3-di(benzylthio)prop2-enedithioate, 3-benzylthio-5,5-dimethylcyclohex-2-ene-1-thione and the like,
- thiocarbonylthio compounds with α-nitrogen atoms, e.g. benzyl 1-pyrrolecarbodithioate, benzyl 1-(2-pyrrolidinone)carbodithioate, 2-cyano-but-2-yl 1-pyrrolecarbodithioate, 2-cyanoprop-2-yl 1-pyrrolecarbodithioate and the like,
- benzyl (1,2-benzenedicarboximido)carbodithioate,
- dithiocarbamates such as, but not limited to, N,N-dimethyl-S-(2-cyanoprop-2-yl)dithiocarbamate, N,N-diethyl S-benzyl dithiocarbamate,
- N,N-diethyl S-(2-ethoxycarbonylprop-2-yl)dithiocarbamate,
- thiocarbonylthio compounds with an α-oxygen substituent (xanthate esters) such as, but not limited to, O-ethyl S-(1-phenylethyl)xanthate, O-ethyl S-(2-(ethoxycarbonyl)prop-2-yl)xanthate, O-ethyl S-(2-cyanoprop-2-yl)xanthate, O-ethyl S-(2-cyanoprop-2-yl)xanthate, O-ethyl S-cyanomethyl xanthate, O-phenyl S-benzyl xanthate, O-pentafluorophenyl S-benzyl xanthate,
- bis(thiocarbonyl) disulfides,
- 2-cyano-2-butyldithiobenzoate, and
- benzyl 1-imidazolecarbodithioate.

Further suitable sulfur-based chain transfer agents include trithiocarbonates such as for instance disclosed in WO 01/60792 or in WO 2005/095466, or S,S'-bi-(α,α'-methyl-α"-acetate) trithiocarbonate disclosed in CN102746439-B, or bis-[S-n-dodecyl-S'-(2-isobutyric acid group-4,4'-azocyanoamyl ester]trithiocarbonate disclosed in CN103450372-A, or butyl phthalimidomethyl trithiocarbonate, or methyl-2-(*n*-pentyltrithiocarbonyl)propanoate.

The selection of the most appropriate chain transfer agent is a matter of ordinary skill in the art and, depending upon the monomer to be polymerized, can be accomplished without undue burden by using guidance from reviews such as, but not limited to, Polymers (2014) 6, pages 1443-1447 and Australian Journal of Chemistry (2012) 65, pages 985-1076.

The source of initiating free radicals can be any suitable method of generating free radicals such as thermal initiators (e.g. peroxides, peroxyesters, or azo compounds), redox initiating systems, photochemical initiating systems or high energy radiation (e.g. electron beam, X- or gamma-radiation). The initiating system is chosen as having sufficient solubility in the reaction medium (including the monomer) and such that under the reaction conditions there is no substantial adverse interaction of the initiating system with the chain transfer agent. Thermal initiators are chosen to have an appropriate half life at the temperature of polymerization, and can include one or more of the following compounds: 2,2'-azobis(isobutyronitrile), 2,2'-azobis(2-cyano-2-butane), dimethyl 2,2'-azobisdimethylisobutyrate, 4,4'-azobis(4-cyano-pentanoic acid), 1,1'-azobis(cyclohexanecarbonitrile), 2-(t-butylazo)-2-cyano-propane, 2,2'-azobis[2-methyl-N-(1,1)-bis(hydoxymethyl)-2-hydroxyethyl] propionamide, 2,2'-azobis(2-methyl-N-hydroxyethyl)]-propionamide, 2,2'-azobis(N,N'-dimethyleneisobutyramidine) dihydrochloride, 2,2'-azobis(2-amidinopropane) dihydrochloride, 2,2'-azobis(N,N'-dimethyleneisobutyr-amine), 2,2'-bis(2-methyl-N-[1,1-bis(hydroxymethyl)-2-hydroxyethyl propionamide), 2,2'-azobis(2-methyl-N-[1,1-bis(hydroxymethyl)ethyl] propionamide), 2,2'-azobis[2-methyl-N-(2-hydroxyethyl) propionamide], 2,2'-azobis(isobutyramide) dihydrate, 2,2'-azobis(2,2,4-trimethylpentane), 2,2'-azobis(2-methylpropane), t-butylperoxyacetate, t-butyl peroxybenzoate, t-butyl peroxyoctoate, t-butylperoxyneodecanoate, t-butylperoxy isobutyrate, t-amyl peroxypivalate, t-butyl peroxypivalate, di-isopropyl peroxydicarbonate, dicyclohexylperoxydicarbonate, dicumyl peroxide, dibenzoyl peroxide, dilauroylperoxide, potassium peroxydisulfate, ammonium peroxydisulfate, di-t-butyl hyponitrite and dicumyl hyponitrite.

Suitable photochemical initiator systems include benzoin derivatives. benzophenones, acyl phosphine oxides, and photoredox systems. Redox initiator systems can include combinations of an oxidant (e.g. potassium peroxydisulfate, hydrogen peroxide, t-butylhydroperoxide) and a reductant (e.g. iron (II), titanium (III), potassium thiosulfite, or potassium bisulfite). Other suitable initiating systems are disclosed in *"*The Chemistry of Free Radical Polymerization" Pergamon, London (1995) 53 - 95.

Suitable RAFT-polymerizable monomers include vinyl esters (such as vinyl acetate, vinyl butyrate, vinyl benzoate, vinyl pivalate and others reported on scheme 3 of Polymers (2014) 6, page 1443), acrylate and methacrylate esters, acrylic and methacrylic acid, styrene, acrylamide, methacrylamide, conjugated dienes and methacrylonitrile. Specifically suitable monomers include, but are not limited to, methyl methacrylate, ethyl methacrylate, propyl methacrylate, butyl methacrylate, 2-ethylhexyl methacrylate, isobomyl methacrylate, methacrylic acid, benzyl methacrylate, phenyl methacrylate, methacrylonitrile, α-methylstyrene, methyl acrylate, ethyl acrylate, propyl acrylate, butyl acrylate, 2-ethylhexyl acrylate, isobornyl acrylate, acrylic acid, benzyl acrylate, phenyl acrylate, acrylonitrile, styrene, glycidyl methacrylate, 2-hydroxyethyl methacrylate, hydroxypropyl methacrylate, hydroxybutyl-methacrylate, N,N-dimethylaminoethyl meth-acrylate, N,N-diethylaminoethyl methacrylate, triethyleneglycol methacrylate, itaconic anhydride, itaconic acid, glycidyl acrylate, 2-hydroxyethyl acrylate, hydroxypropyl acrylate, hydroxybutyl acrylate, N,N-dimethylaminoethyl acrylate, N,N-diethylaminoethyl acrylate, triethyleneglycol acrylate methacrylamide, N-methylacrylamide, N,N-dimethylacrylamide, N-*tert*-butyl-methacrylamide, N-*n*-butylmethacrylamide, N-methylolmethacrylamide, N-ethylolmethacrylamide. N-*tert*-butylacrylamide, N-n-butylacrylamide, N-methylolacrylamide, N-ethylolacrylamide, vinylbenzoic acid, diethylamino-styrene, α-methylvinyl benzoic acid, diethylamino α-methylstyrene. p-vinyl-benzenesulfonic acid, trimethoxysilyipropyl methacrylate, triethoxysilylpropyl methacrylate, tributoxysilylpropyl methacrylate, dimethoxymethylsilyl-propyl methacrylate, diethoxymethylsilylpropyl methacrylate, dibutoxymethyl-silylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilyipropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethvlsilylpropyl acrylate, dimethoxysilylpropyl acrylate, diethoxysilylpropyl acrylate, dibutoxysilyipropyl acrylate, diisopropoxysilylpropyl acrylate, maleic anhydride, N-phenylmaleimide, N-butylmaleimide, N-vinylcarbazole, N-vinylindole derivatives, N-vinyl-pyrrolidone, N-vinyl-caprolactame, N-vinylformamide, N-vinylacetoamide derivatives, N-vinyl(na)phthalimides, N-vinylimidazolium salts, N-vinyltriazoles (such as listed in Eur. Polym. J. (2013) 49:2808), isoprene, and butadiene.

The selection of monomers polymerizable by RAFT is a matter of ordinary skill in the art and can be selected by using guidance from reviews such as, but not limited to, Polymers (2014) 6, pages 1443-1447 and Australian Journal of Chemistry (2012) 65, pages 985-1076.

Suitable RAFT-polymerizable monomers also include optionally α-substituted alkoxyalkyl or alkylthio-alkyl acrylate monomers preferably selected from the group consisting of optionally α-substitutedC₁₋₄ alkoxy-C₁₋₄ alkyl acrylates and C₁₋₄ alkyl-thioC₁₋₄ alkyl acrylates, e.g. 1-ethoxyethyl acrylate, 1-methoxyethyl acrylate, 1-isopropoxyethyl acrylate, 1-*iso*-butoxyethyl acrylate, 1-(*tert-*butoxy)ethyl acrylate, 1-ethoxymethyl acrylate, 1-methoxymethyl acrylate, 1-isopropoxymethyl acrylate, 1-butoxymethyl acrylate, 1-(*tert*-butoxy)-methyl acrylate, 1-ethylthioethyl acrylate, 1-methylthioethyl acrylate, 1-isopropylthioethyl acrylate, 1-butylthioethyl acrylate, 1-(*tert*-butyl)thioethyl acrylate, 1-ethylthiomethyl acrylate, 1-methylthiomethyl acrylate, 1-isopropyl-thiomethyl acrylate, 1-butylthiomethyl acrylate, 1-(*tert*-butyl)thiomethyl acrylate. Preferably the α-substituent is selected from the group consisting of C₁₋₄ alkyl, C₃₋₁₀ cycloalkoxy-C₁₋₄ alkyl, aryl-C₁₋₄ alkoxy-C₁₋₄ alkyl, aryloxy-C₁₋₄ alkyl, C₁₋₄ alkoxy-C₁₋₄ alkyl and arylC₁₋₄ alkoxy-C₁₋₄ alkyl. More preferably this α-substituent is methyl, resulting in the methacrylates corresponding to the acrylates listed above, e.g. 1-ethoxyethyl methacrylate, 1-methoxyethyl methacrylate, 1-isopropoxyethyl methacrylate, 1-butoxyethyl methacrylate, 1-(*tert*-butoxy)ethyl methacrylate, 1-ethoxymethyl methacrylate, 1-methoxymethyl methacrylate, 1-isopropoxy-methyl methacrylate, 1-*iso*-butoxymethyl methacrylate, 1-(*tert-*butoxy)methyl methacrylate, 1-ethylthioethyl methacrylate, 1-methylthioethyl methacrylate, 1-isopropylthioethyl methacrylate, 1-butylthioethyl methacrylate, 1-(*tert*-butyl)thioethyl methacrylate, 1-ethylthiomethyl methacrylate, 1-methylthio-methyl methacrylate, 1-isopropyl-thiomethyl methacrylate, 1-butylthiomethyl methacrylate, and 1-(*tert-*butyl)thiomethyl methacrylate.

The α-substituent of an α-substitutedacrylate monomer suitable for the present invention may also be, according to Uno et al in Enantiomer (2000) 5:29-36, Chirality (1998) 10:711-716 and J. Polym. Sci A (1997) 35:721-726:
- C₃₋₁₀ cycloalkoxy-C₁₋₄ alkyl such as, but not limited to, menthoxymethyl,
- arylC₁₋₄ alkoxy-C₁₋₄ alkyl such as, but not limited to, (1-phenyl-ethoxy)methyl, and
- aryloxy-C₁₋₄ alkyl, C₁₋₄ alkoxy-C₁₋₄ alkyl and arylC₁₋₄ alkoxy-C₁₋₄ alkyl such as, but not limited to, phenoxymethyl, methoxymethyl, benzyloxymethyl and *tert*-butoxymethyl.

In the present invention, polymerization is performed until the monomer conversion reaches a value between 40% and 90%, preferably between 50% and 85%, more preferably between 60% and 80%, thus producing a mixture of the monomer and of a monodisperse polymer end-capped with a terminal group or atom derived from the chain transfer agent. The process of the present invention can be efficiently performed within a broad range of polymerisation temperatures from about 20°C to about 110°C, preferably from about 40°C to about 95°C, and more preferably from about 50°C to about 80°C while keeping a reasonably high polymerisation rate for most monomers.

If thermal initiation is not sufficient to generate free radicals, depending upon the selected polymerisation temperature, the initiation system used in the process of the present invention may include, in addition to the sulfur-based chain transfer (RAFT) agent, one or more free-radical initiators as defined above. In such a case, the molar ratio between the RAFT agent and the free-radical initiator(s) is preferably selected from about 1:1 to about 20:1, depending upon parameters such as, but not limited to, the monomer to be polymerised, the polymerisation temperature, and the like.

The RAFT polymerization method of the invention may be performed in the absence or in the presence of a solvent system. The solvent may be organic or aqueous. Suitable organic solvents include, but are not limited to, linear ethers, cyclic ethers, alkanes, cycloalkanes, aromatic hydrocarbons, halogenated hydrocarbons, acetonitrile, dimethylformamide, dimethylacetamide and mixtures thereof in any proportions, and supercritical solvents such as CO₂. With some monomers, emulsion polymerization may be performed in the presence of water, according to knowledge of those skilled in the art.

In the process of the present invention, polymerization may be continued until the number average molecular weight of the monodisperse RAFT polymer ranges from about 600 to about 100,000, preferably from about 1,200 to about 50,000, more preferably from about 2,500 to about 30,000. Preferably, according to the present invention, the RAFT process is carried out with a molar ratio of the monomer to the sulfur-based chain transfer (RAFT) agent ranging from about 20 to about 2,000, preferably from about 100 to about 1,000.

A critical feature of the process of the present invention is that, only after the monomer conversion has reached a value between 40% and 90%, a 5-fold to 100-fold molar excess, with respect to the thiocarbonylthio compound, of a reducing agent capable of performing aminolysis of the thiocarbonylthio end groups of the polymer is added to the reaction mixture. In other words, the process of the present invention involves monitoring, via any technical means conventional in the art, the monomer conversion, and starting addition of the reducing agent before monomer conversion has reached 90%, preferably 80%, more preferably 70%, most preferably about 60%. Means for monitoring monomer conversion are well known in the art and include any *in situ* in-line detection device. Preferably the detection device produces a signal that is then transferred to a device (e.g. a valve or pump) activating admission of the reducing agent into the polymerization reaction zone. Addition of the reducing agent is preferably performed without isolating, extracting, or otherwise purifying the end-capped polymer from the reaction mixture. In other words, addition of the reducing agent is preferably performed directly into the crude reaction mixture comprising the monomer, the monodisperse polymer end-capped with the terminal group or atom derived from the chain transfer agent, and optionally the reaction solvent. Conventionally, the process of the present invention may be performed in any type of reactor suitable for RAFT polymerization, which may be provided with stirring means, temperature control means, pressure control means, admission ducts for the monomer, the thiocarbonylthio compound, the reducing agent and optionally the solvent, and the like.

Any reducing agent capable of performing aminolysis of the thiocarbonylthio end groups of the polymer may be added to the reaction mixture, provided that it is added in a molar excess as defined above. Depending upon parameters such as the monomer, the monomer conversion at the time of adding the reducing agent, the type of reducing agent and the like, the molar excess may be preferably a 10-fold to 70-fold molar excess, more preferably a 15-fold to 30-fold molar excess. The skilled person will be able to readily determine, without undue burden, the optimal excess of the reducing agent with respect to the thiocarbonylthio compound, taking into account process parameters such as the easiness of separation of the resulting polymer product from the residual monomer, the reducing agent excess, and optionally the solvent system. For industrial efficient practice, the process of the present invention may include, at the separation step(s), means for recycling the excess non-reacted reducing agent.

Although this is not a compulsory feature of the present invention, addition of the reducing agent is preferably carried out at a temperature lower than the polymerization temperature. For instance, reducing agent addition may be performed at a temperature ranging from 0°C to 80°C, preferably from 15°C to 50°C, and more preferably from about 20°C to 40°C. This means that the reaction mixture from the polymerization step may be allowed to, or forced to by means of cooling means, cool down before addition of the reducing agent. Depending upon parameters such as the monomer, the reducing agent and the temperature, aminolysis of the thiocarbonylthio end groups of the polymer may be performed for a reaction time ranging from 10 minutes to 24 hours, preferably from 30 minutes to 6 hours, more preferably from 5 minutes to 3 hours.

In one embodiment of the process of the present invention, the reducing agent used for aminolysis may be a primary, optionally substituted, saturated aliphatic amine such as, but not limited to, ethanolamine, n-propylamine, isopropylamine, n-butylamine, isobutylamine, *tert*-butylamine, n-pentylamine, n-hexylamine, n-heptylamine, n-octylamine, *n*-decylamine, and n-dodecylamine.

In another embodiment of the process of the present invention, the reducing agent used for aminolysis may be a primary, optionally substituted, ethylenically unsaturated aliphatic amine such as, but not limited to, allylamine.

In another embodiment of the process of the present invention, the reducing agent used for aminolysis may be a primary, optionally substituted, arylalkylamine such as, but not limited to, benzylamine, phenethylamine and substituted benzylamines wherein the one or more (preferably one or two) substituents present on the phenyl moiety may be selected from the group consisting of halogen, alkyl, alkoxy, heterocyclyl and the like.

In another embodiment of the process of the present invention, the reducing agent used for aminolysis may be a primary saturated cycloaliphatic amine such as, but not limited to, cyclopropylamine, cyclobutylamine, cyclopentylamine, and cyclohexylamine.

In another embodiment of the process of the present invention, the reducing agent used for aminolysis may be a secondary saturated aliphatic amine such as, but not limited to, dimethylamine, diethylamine, dipropylamine, diisopropylamine.

In another embodiment of the process of the present invention, the reducing agent used for aminolysis may be a secondary saturated cycloaliphatic amine such as, but not limited to, piperidine, 4-phenylpiperidine, ethyleneimine (aziridine), trimethyleneimine (azetidine), pyrrolidine, and N-substituted piperazines wherein the N-substituent may be aryl (preferably phenyl).

In another embodiment of the process of the present invention, the reducing agent used for aminolysis may be a secondary heterocyclic amine such as, but not limited to, morpholine and thiomorpholine.

In another embodiment of the process of the present invention, the reducing agent used for aminolysis may be a primary saturated aliphatic diamine such as, but not limited to, ethylenediamine, 1,2-diaminopropane, 1,3-diaminopropane, 1,4-diaminobutane, 1,5-diaminopentane, 1,6-diaminohexane, 1,4-diaminocyclohexane, 1,7-diaminoheptane, 1,8-diaminooctane, and 1,10-diaminodecane.

In another embodiment of the process of the present invention, the reducing agent used for aminolysis may be a secondary saturated aliphatic diamine such as, but not limited to, homopiperazine, piperazine and substituted piperazines

In another embodiment of the process of the present invention, the reducing agent used for aminolysis may be hydrazine or a hydrazine derivative, such as phenylhydrazine, methyl hydrazine, ethylhydrazine, propylhydrazine and isopropyl-hydrazine.

In yet another embodiment of the process of the present invention, the reducing agent used for aminolysis may be an inorganic azide salt such as sodium azide or potassium azide.

The selection of the most appropriate reducing agent, within the specific embodiments listed above, is a matter of ordinary skill in the art which can be performed without undue burden, given the reactivity of the amino group with the functional group present in the end group of the polymer. Preferably the reducing agent is a monomer, not a polymer.

Yet another embodiment of the process of the present invention may further comprise a step of adding more RAFT-polymerizable ethylenically unsaturated monomer together with the reducing agent capable of performing aminolysis of the thiocarbonylthio end groups of the polymer. This additional monomer may be the same as, or different from, the first monomer introduced at the origin of the process.

The following examples solely serve the purpose of illustrating specific but non-limiting ways of carrying out the present invention.

### EXAMPLE 1

The *in situ* end-group removal reaction of the invention was explored in an automated parallel synthesizer. RAFT polymerizations were performed using a ratio of [monomer]:[CTA]:[initiator] equal to 100:1:0.1 at a monomer concentration of 2 M at 70°C and with 2-(butylsulfanyl)carbonylthiosulfanyl propionic acid. Polymerizations were stopped at approximately 60% monomer conversion to ensure high chain-end functionality of the resulting polymers. After polymerization, the polymer solutions were cooled down to room temperature followed by addition of 25 molar equivalents of propylamine (with respect to the chain transfer agent, CTA) to the reaction vessel. Excess of propylamine was added due to the potential occurrence of side reactions which might consume part of the amine.

Polymers obtained before and after end group modification were characterized by size-exclusion chromatography (SEC) with refractive index (RI) detection, which revealed a minor change of the molecular weight and dispersity (Ð) giving a first indication of successful end group modification (Figure 1). More importantly, no additional shoulders were present in the SEC traces of the polymers after end group transformation indicating the absence of disulfide formation after aminolysis. Further characterizations were then performed by UV-Vis spectroscopy, SEC with UV detection and matrix assisted laser desorption/ionization time of flight mass spectrometry (MALDI-TOF MS) to assess the efficiency of the *in situ* end-group removal procedure. Poly(*N,N-*dimethylacrylamide) (PDMAM) and poly(*n*-butylacrylate) (PBA) were analyzed in most detail serving as representative examples for polyacrylamides and polyacrylates, respectively. For other polymers such as poly(2-methoxyethylacrylate), poly(*N*-isopropylacrylamide), poly(2-hydroxyethylacrylate) and poly(di(ethylene glycol) methyl ether acrylate), successful end-group removal was confirmed by SEC with both RI and UV detection. The one-pot procedure of the invention, combining RAFT polymerization and *in-situ* end group transformation, was first assessed by UV-Vis spectroscopy in the range of 380 - 500 nm, corresponding to the absorbance peak of the yellow trithiocarbonate group (see Figure 2, data for PDMAM, PBA before and after aminolysis as well as the CTA). For poly(*N,N-*dimethylacrylamide)

(PDMAM), the disappearance of this absorption peak can be clearly observed after aminolysis indicating the high efficiency of the reaction. For poly(*n-*butylacrylate) (PBA-, however, the polymer after end-group modification still exhibits some absorption at these wavelengths, which may be attributed to the tail of ester group absorption peak. Importantly, the peak at 430 nm has also disappeared for PBA after the end-group modification procedure of the present invention.

**Table - Overview of the synthesized polymers and their characterization data**

| Monomers | Conversion / %^{a} | DP^{a} | RAFT polymers | | Polymers after end group transformation | |
|---|---|---|---|---|---|---|
| | | | Mn/kDa^{b} | Ð^{b} | Mn/kDa^{b} | Ð^{b} |
| NIPAM | 75.8 | 76 | 14.6 | 1.09 | 15.3 | 1.09 |
| DMAM | 73.9 | 74 | 7.8 | 1.13 | 7.6 | 1.13 |
| BA | 55.1 | 55 | 4.8 | 1.24 | 4.9 | 1.22 |
| HEA | 71.5 | 72 | 32.3 | 1.14 | 28.5 | 1.16 |
| mDEGA | 63.7 | 64 | 12.0 | 1.18 | 11.3 | 1.15 |
| MEA | 59.6 | 60 | 12.1 | 1.15 | 11.3 | 1.13 |
| ^{a}Conversion and DP were determined by gas chromatography with dimethylacetamide (DMA) as internal standard; ^{b}Number average molecular weight (Mn) and dispersity (Ð) were determined by DMA SEC. | | | | | | |

The next step to assess the success of the *in situ* end group transformation was performed by size exclusion chromatography (SEC) with a diode array detector (DAD). As shown in Figure 3, the RAFT polymer PDMAM-CTA exhibits strong absorption at 25 minutes, while no absorption can be detected at 450 nm after end-group removal, which confirms the complete removal of the trithiocarbonate group. In contrast to these results with DAD detection, SEC with refractive index detector (RID) revealed polymer signals from both PDMAM and PDMAM-CTA at almost the same time (Figure 1) demonstrating that the polymer is intact and that only the end-group has been removed. Similarly, the absorbance for PBA-CTA at 450 nm vanished after aminolysis revealing successful removal of the CTA functionality. The full absorbance spectra 56 at the retention time of the polymers also suggest the complete end-group removal as indicated by the complete disappearance of the polymer signals.

To provide a final proof of the structure of the polymers obtained after the *in situ* end-group modification procedure of this invention, matrix-assisted laser desorption ionization time-of-flight mass spectrometry (MALDI-TOF-MS) was performed for all polymers after end group transformation. Only PNIPAM, PDMAM and PBA could be successfully ionized and detected and no spectra could be obtained for PHEA, PMEA and PmDEGA most likely due to their high hydrophilicity, which appears to limit analysis by MALDI-TOF-MS. As shown in Figure 4 for the mass spectrum of PDMAM, three major distributions are observed, all of them with an interval of 99.25 mass units corresponding to the DMAM repeat unit. The main peaks, for example m/z = 5579.32, can be attributed to the expected polymer species with a degree of polymerization of 54 and the thioether end group resulting from Michael addition, cationized by Na+. The other major distributions, represented by the peaks with m/z= 5601.47 and 5634.48, can be ascribed to the sodium and potassium adducts of the polymer cationized by Na+ and K+, respectively (see Figure 4 for the proposed chemical structures). The MALDI spectrum of PBA reveals two main distributions with mass interval of 128.31 corresponding to the BA monomer (Figure 5). The two series of main peaks, for example m/z=4999.67 and 5021.08, can be identified as the expected polymer species with a degree of polymerization of 49, ionized with H+ or Na+ and a thiol-ether w-end group. The mass spectrum of poly-N-isopropylacrylamide (PNIPAM) shown in Figure 6 also suggests the successful end group transformation.

### EXAMPLE 2

The one-pot synthesis of polymethyl methacrylate (PMMA) was performed (total time 1 hour) as in example 1, but using the following trithiocarbonate, methyl-2-(n-pentyltrithiocarbonyl)propanoate, as a RAFT chain-transfer agent (CTA):

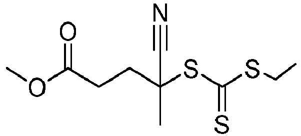

The resulting polymer products were ascertained with the following structural formulae:

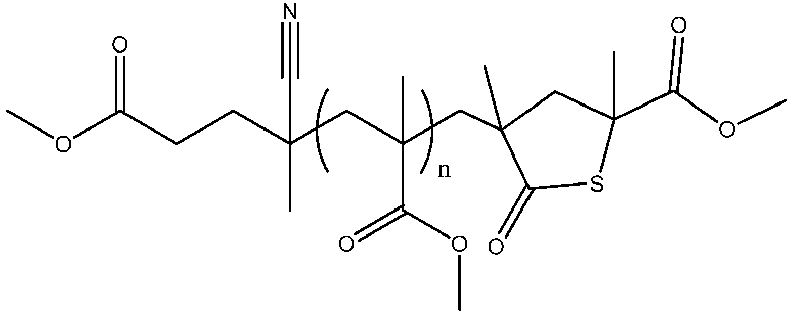

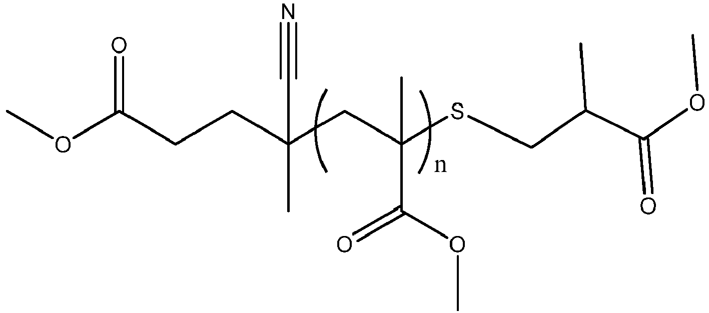

Alternatively, with addition of butyl acrylate (BA) just before adding the amine (but after RAFT polymerization) afforded the following products: 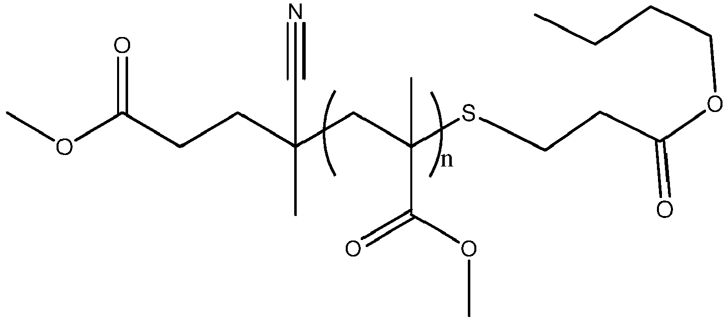 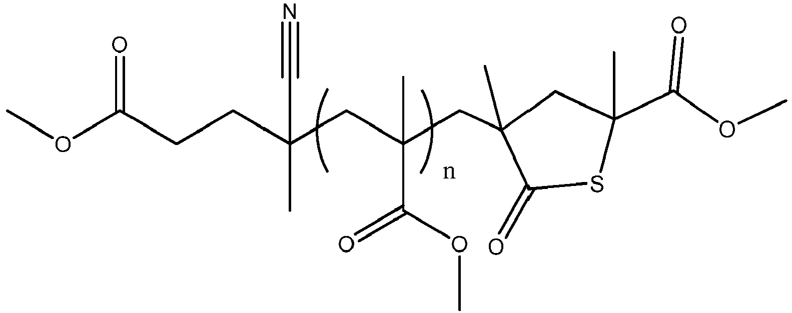 thus indicating the formation of a thiolactone functionalized product via intramolecular cyclization besides the Michael addition product.

Time saved with our procedure, compared with the procedure reported by Qiu and Winnik in Macromol. Rapid Commun. (2006) 27:1648-1653, is 23 hours (purification of the RAFT polymer with RAFT agent needs 2 hours for isolating the polymer, 10 hours for drying to remove trace amounts of solvent, and the two steps reaction of aminolysis and thiol with acrylate reaction reported by Winnik is 12 hours).

## Claims

1. A process for preparing an inert RAFT polymer, comprising polymerizing a RAFT-polymerizable ethylenically unsaturated monomer in the presence of a thiocarbonylthio compound until the monomer conversion reaches a value between 40% and 90%, and further comprising, when such value has been reached, adding a 5-fold to 100-fold molar excess, with respect to the thiocarbonylthio compound, of a reducing agent capable of performing aminolysis of the thiocarbonylthio end groups of the polymer.

2. A process according to claim 1, wherein the reducing agent is selected from the group consisting of primary saturated aliphatic and cycloaliphatic amines, primary ethylenically unsaturated aliphatic amines, primary arylalkylamines, secondary aliphatic and cycloaliphatic amines, secondary heterocyclic amines, primary saturated aliphatic diamines, secondary saturated aliphatic diamines, hydrazines, and inorganic azide salts.

3. A process according to claim 1 or claim 2, wherein the RAFT-polymerizable ethylenically unsaturated monomer is selected from the group consisting of styrenes, acrylic esters, acrylic amides, methacrylic esters, methacrylic amides, N-vinylcarbazole, N-vinylpyrrolidone, vinyl esters, butadiene, and isoprene.

4. A process according to any one of claims 1 to 3, wherein the thiocarbonylthio compound is selected from the group consisting of dithiobenzoates, trithiocarbonates and xanthates.

5. A process according to any one of claims 1 to 4, wherein the reducing agent addition is performed at a temperature ranging from 0°C to 80°C.

6. A process according to any one of claims 1 to 5, wherein the reducing agent addition is performed at a temperature ranging from 20°C to 50°C.

7. A process according to any one of claims 1 to 6, wherein the aminolysis of the thiocarbonylthio end groups of the polymer is performed for a reaction time ranging from 10 minutes to 24 hours.

8. A process according to any one of claims 1 to 7, wherein the aminolysis of the thiocarbonylthio end groups of the polymer is performed for a reaction time ranging from 30 minutes to 6 hours.

9. A RAFT polymer prepared according to the process of any one of claims 1 to 8, having number average molecular weight ranging from about 600 to about 100,000.

10. A RAFT polymer according to claim 9, having a polydispersity index ranging from 1.05 to 1.30.
